# FASCICULE DE BREVET EUROPEEN

(11) **EP 2 856 245 B1**
(45) Date de publication et mention de la délivrance du brevet: **08.08.2018**
(21) Numéro de dépôt: 13723832.5
(22) Date de dépôt: 17.04.2013
(51) Int. Cl.: G02C 5/10, G02C 5/22, G02C 1/08

(54) **MONTURE DE LUNETTES**
BRILLENRAHMEN
SPECTACLES FRAME

(30) Priorité: 31.05.2012 FR 1255044
(43) Date de publication de la demande: 08.04.2015
(73) Titulaire: Surfolding, 69570 Dardilly (FR)
(72) Inventeur: AZOULAY, Guy, F-69006 Lyon (FR); KESSOUS, Francis, 69340 Francheville (FR)
(74) Mandataire: Delorme, Nicolas
(86) Numéro de dépôt international: PCT/FR2013/050838
(87) Numéro de publication internationale: WO 2013/178895

(56) Documents cités:
- WO-A1-2011/037454
- FR-A1- 2 952 442
- FR-A1- 2 952 443
- US-A1- 2008 137 029

## Description

La présente invention concerne une monture de lunettes.

Traditionnellement, une monture de lunettes présente une façade optique dans laquelle sont enchâssés des verres et deux branches latérales articulées en rotation par rapport à la façade optique. Il est connu du document US2008137029 une monture de lunettes comprenant une façade et deux branches reliées à la façade par des clips de connexion.

Il est connu du document de brevet FR2952442 des lunettes comprenant une patte de liaison rattachée à la façade, la patte de liaison étant destinée à être insérée dans un canal d'un tenon pour assemblé un sous-ensemble tenon - branche latérale à la façade. Le tenon comprend par ailleurs une articulation le reliant à une extrémité d'une branche latérale.

Ainsi, les lunettes selon le document de brevet FR2952442 présentent un tenon indépendant de la monture, constituant avec la branche latérale et son articulation, un sous-ensemble amovible et interchangeable. Ces lunettes offrent donc l'avantage de faciliter l'interchangeabilité du sous-ensemble tenon - branche - articulation, ce qui permet de personnaliser les lunettes par un opticien.

Cependant, il résulte parfois de cet agencement des difficultés d'introduction de la patte de liaison dans le canal du tenon. En effet, la section globale des pattes de liaison correspond sensiblement à la section du canal du tenon dans lequel elles doivent être insérées. Par conséquent, le moindre décalage transversal ou vertical des pattes de liaison l'une par rapport à l'autre avant leur introduction dans le canal du tenon peut empêcher cette introduction. L'une des pattes de liaison, en décalage transversal ou vertical par rapport à l'autre, peut effectivement buter contre la paroi périphérique délimitant l'entrée du canal du tenon.

Aussi la présente invention vise à pallier tout ou partie de cet inconvénient en proposant une monture de lunettes permettant de considérablement faciliter le montage d'un sous-ensemble amovible tenon - branche sur une façade.

A cet effet, la présente invention a pour objet une monture de lunettes comprenant une façade optique dans laquelle peuvent être enchâssés des verres, et deux sous-ensembles amovibles destinés à être rattachés à la façade optique et incluant chacun une branche latérale, caractérisée en ce que la monture de lunettes présente au moins deux pattes de liaison s'étendant depuis la façade optique et comprenant chacune une surface fonctionnelle d'appui transversal, les surfaces fonctionnelles d'appui transversal étant agencées pour se superposer transversalement lorsque les deux pattes de liaison sont rapprochées l'une de l'autre pour permettre le rattachement de l'un des sous-ensembles à la façade optique par insertion des pattes de liaison dans un logement d'un tenon articulé par rapport à la branche latérale de l'un des sous-ensembles, la superposition des surfaces fonctionnelles d'appui transversal bloquant un déplacement transversal relatif des pattes de liaison l'une par rapport à l'autre afin de faciliter leur insertion dans le logement.

Ainsi, la monture de lunettes selon l'invention offre la possibilité de prévenir l'apparition d'un décalage transversal entre les deux pattes de liaison avant leur insertion dans le logement du tenon. L'insertion des pattes de liaison dans le logement du tenon en est grandement facilitée.

On notera que par appui transversal ou superposition transversale on entend appui ou superposition dans une direction sensiblement parallèle à la direction dans laquelle s'étend la façade optique.

Selon un mode de réalisation, les pattes de liaison comprennent chacune, en plus de la surface fonctionnelle d'appui transversal, une surface fonctionnelle d'appui vertical, les surfaces fonctionnelles d'appui vertical étant agencées pour se superposer verticalement lorsque les deux pattes de liaison sont rapprochées l'une de l'autre pour permettre le rattachement de l'un des sous-ensembles à la façade optique par insertion des pattes de liaison dans le logement du tenon, la superposition des surfaces fonctionnelles d'appui vertical bloquant un déplacement vertical relatif des pattes de liaison l'une par rapport à l'autre.

Ainsi, les pattes de liaison, lorsqu'elles sont rapprochées l'une de l'autre, sont également en appui vertical, c'est-à-dire que les pattes de liaison butent l'une contre l'autre lorsqu'elles sont rapprochées. Cela évite un décalage ou un mauvais alignement des pattes de liaison avant leur insertion dans le logement du tenon. Par conséquent, l'insertion des pattes de liaison dans le tenon en est facilitée.

On notera que par appui vertical ou superposition verticale on entend appui ou superposition dans une direction sensiblement parallèle à l'axe de rotation des branches latérales par rapport à la façade optique.

Selon une forme d'exécution, les surfaces fonctionnelles d'appui transversal sont, préalablement au rapprochement des pattes de liaison, décalées transversalement.

Autrement dit, les pattes de liaison ne sont pas alignées verticalement. Ainsi, les pattes de liaison, qui présentent une certaine élasticité, se serrent naturellement l'une contre l'autre au niveau de leurs surfaces fonctionnelles d'appui transversal lorsqu'elles sont rapprochées l'une de l'autre. En d'autres termes, une fois rapprochées et leurs surfaces fonctionnelles d'appui transversal mises en contact, les pattes de liaison se maintiennent seules appuyées l'une contre l'autre. Cela facilite leur insertion puisque l'utilisateur n'est pas obligé de maintenir une pression maintenant serrées les pattes de liaison l'une contre l'autre au moment de leur insertion. Il n'y a donc pas besoin d'utiliser un anneau de serrage.

Selon une possibilité, les pattes de liaison comprennent chacune une extrémité formant un crochet de forme similaire muni d'une encoche destinée à recevoir une extrémité d'un organe de fixation destiné à maintenir les pattes de liaison insérées dans le logement du tenon.

On notera que l'extrémité de l'organe de fixation termine sa course dans l'espace délimité par les encoches, sans traverser les pattes les pattes de liaison. Il n'y a donc pas de perçage des pattes de liaison.

De manière avantageuse, chaque extrémité en forme de crochet comprend une face latérale correspondant à l'une des surfaces fonctionnelles d'appui transversal.

Ainsi, le rapprochement des pattes de liaison afin de les insérer dans le logement du tenon coïncide avec une superposition transversale des crochets formés par les extrémités respectives des pattes de liaison.

Selon une possibilité, l'une des extrémités en forme de crochet comprend une face inférieure correspondant à l'une des surfaces fonctionnelles d'appui vertical, l'autre extrémité en forme de crochet comprenant un épaulement sur une face latérale, l'épaulement correspondant à l'autre surface fonctionnelle d'appui vertical.

Avantageusement, l'épaulement est agencé pour que la mise en contact des surfaces fonctionnelles d'appui vertical permette la superposition des crochets.

Selon un mode de réalisation, le tenon comprend un organe de butée agencé dans le logement pour bloquer l'insertion d'au moins l'une des pattes de liaison dans le tenon en une position de blocage prédéterminée.

Selon une forme d'exécution, l'organe de butée comprend un alésage destiné à recevoir l'organe de fixation, l'alésage débouchant en regard des encoches des crochets formés par les extrémités des pattes de liaison lorsque les pattes de liaison sont bloquées par l'organe de butée dans la position de blocage prédéterminée.

Selon une possibilité, l'une des pattes de liaison comprend une surface de butée agencée pour venir en appui contre l'organe de butée dans la position de blocage prédéterminée.

Selon un mode de réalisation, au moins l'une des pattes de liaison comprend un épaulement agencé pour venir en appui contre une paroi périphérique délimitant le logement du tenon, dans la position de blocage prédéterminée.

Cela permet de limiter le jeu entre les pattes de liaison insérées dans le tenon et ce dernier.

Selon une possibilité, la branche latérale est montée pivotante sur le tenon, entre une position repliée dans laquelle la branche latérale est sensiblement parallèle à la façade optique et une position déployée dans laquelle la branche latérale est sensiblement perpendiculaire à la façade optique.

La monture de lunettes peut comporter un axe monté pivotant dans le tenon, l'axe étant par exemple solidaire d'une extrémité proximale de la branche latérale.

Selon un mode d'exécution, la monture de lunettes comprend des moyens de rappel élastique agencés pour rappeler la branche latérale en position repliée lorsque la branche latérale quitte la position repliée, et pour rappeler la branche latérale en position déployée lorsque la branche latérale quitte la position déployée.

Ainsi, la branche latérale présente deux positions d'équilibre stable, correspondant à la position repliée et à la position déployée.

Selon une possibilité, la branche latérale comprend une extrémité proximale reliée à l'axe, l'extrémité proximale présentant une première face plane et une deuxième face plane adjacentes et sécantes selon une arête, les moyens de rappel élastiques comprenant un ressort présentant une portion spiralée destinée à venir en appui contre la première face lorsque la branche latérale est en position repliée, et destinée à venir en appui contre la deuxième face plane lorsque la branche latérale est en position déployée, le ressort comprenant une portion de rattachement au tenon.

D'autres caractéristiques et avantages ressortiront clairement de la description détaillée ci-après d'un mode de réalisation, donné à titre d'exemple non limitatif, en référence aux dessins annexés dans lesquels :
- la figure 1 est une vue de profil d'une monture de lunettes selon un mode de réalisation de l'invention,
- les figures 2 à 5 sont des vues partielles en perspective d'une monture de lunettes selon un mode de réalisation de l'invention,
- la figure 6 est une vue partielle en perspective et partiellement en coupe d'une monture de lunettes selon un mode de réalisation de l'invention,
- la figure 7 est une vue partielle de dessus et partiellement en coupe d'une monture de lunettes selon un mode de réalisation de l'invention,
- la figure 8 est un détail de la figure 7.

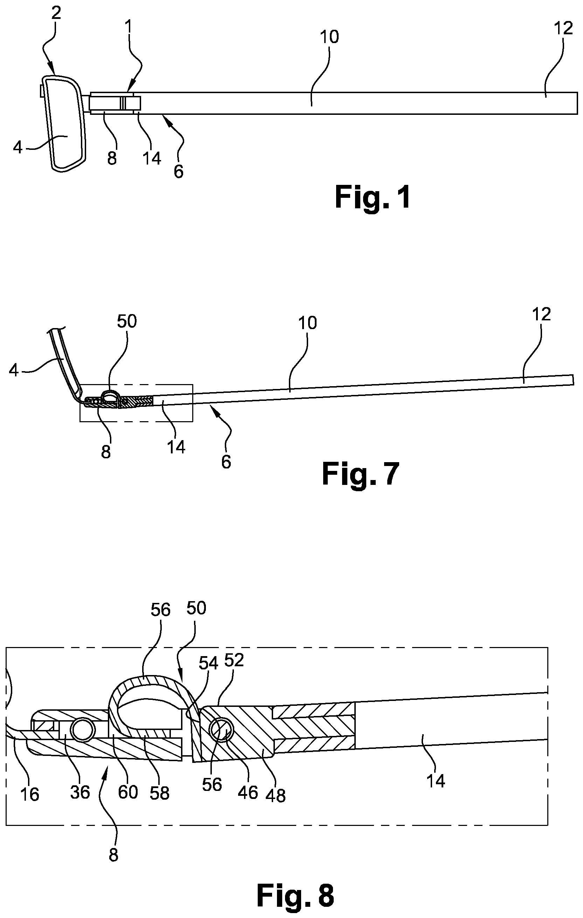

La figure 1 montre une monture 1 de lunettes selon un mode de réalisation de l'invention.

La monture 1 comprend une façade optique 2 dans laquelle peuvent être enchâssés des verres 4, et deux sous-ensembles 6 amovibles, comprenant chacun un tenon 8 et une branche latérale 10 dont une extrémité distale 12 est destinée à prendre appui sur une oreille d'un utilisateur et dont une extrémité proximale 14 est articulée en rotation par rapport au tenon 8, destinés à être rattachés à la façade optique 2.

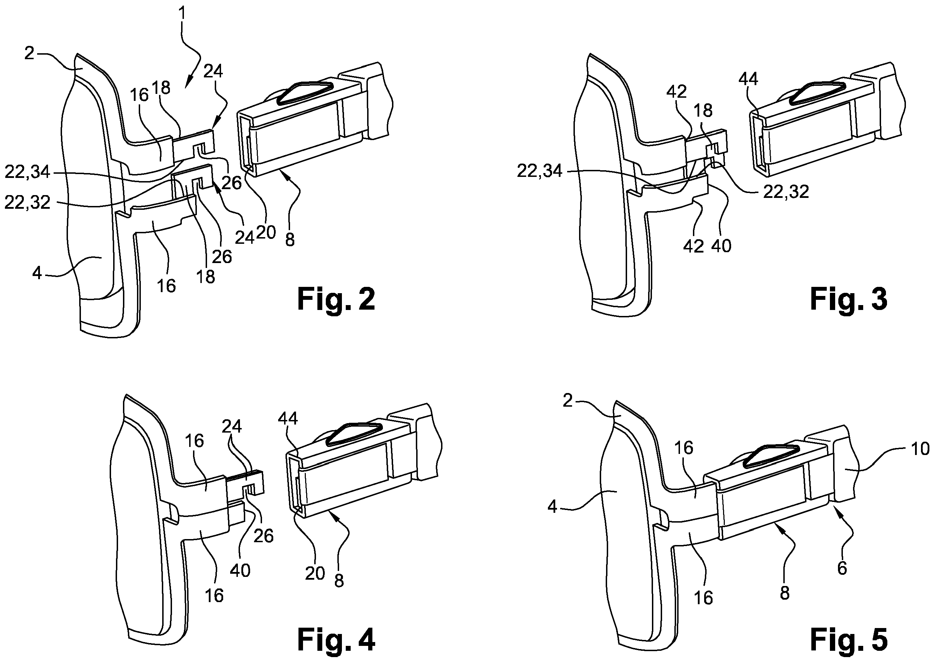

Comme cela est visible sur les figures 2 à 6, la monture 1 de lunettes présente au moins deux pattes 16 de liaison s'étendant sensiblement l'une au dessus de l'autre depuis la façade optique 2, sensiblement perpendiculairement à cette dernière.

Chaque patte 16 de liaison comprend une surface fonctionnelle 18 d'appui transversal. Les surfaces fonctionnelles 18 d'appui transversal sont agencées pour se superposer transversalement lorsque les deux pattes 16 de liaison sont rapprochées l'une de l'autre pour permettre le rattachement de l'un des sous-ensembles 6 à la façade optique 2, par insertion des deux pattes 16 de liaison dans un logement 20 ménagé dans le tenon 8.

La superposition des surfaces fonctionnelles 18 d'appui transversal bloque un déplacement transversal relatif des pattes 16 de liaison l'une par rapport lors de leur insertion dans le logement 20, ce qui évite l'apparition d'un décalage et facilite conséquemment cette insertion.

Avantageusement, les surfaces fonctionnelles 18 d'appui transversal sont dans un état de décalage transversal lorsque les pattes 16 de liaison ne sont pas rapprochées l'une de l'autre pour être insérées dans le logement 20. Autrement dit, les surfaces fonctionnelles 18 d'appui transversal ne sont pas comprises dans un même plan vertical.

Ainsi, un utilisateur doit faire se croiser les pattes 16 de liaison pour mettre en appui les surfaces fonctionnelles 18 des deux pattes de liaison, comme cela est représenté sur les figures 2 et 3. Compte-tenu de l'élasticité des pattes 16 de liaison, le fait de les croiser et de les superposer transversalement a pour effet de les maintenir serrées l'une contre l'autre.

Selon le mode de réalisation illustré aux figures 1 à 8, les pattes 16 de liaison peuvent de plus comprendre chacune une surface fonctionnelle 22 d'appui vertical. Les surfaces fonctionnelles 22 d'appui vertical sont agencées pour se superposer verticalement lorsque les deux pattes 16 de liaison sont rapprochées l'une de l'autre pour permettre le rattachement de l'un des sous-ensembles 6 à la façade optique 2.

La superposition des surfaces fonctionnelles 22 d'appui vertical bloque un déplacement vertical relatif des pattes 16 de liaison l'une par rapport à l'autre.

Les pattes 16 de liaison peuvent comprendre chacune une extrémité formant un crochet 24, de formes similaires. Les crochets 24 comprennent une encoche 26 destinée à recevoir une extrémité 28 d'un organe 30 de fixation, comme une vis. L'organe 30 de fixation est destiné à maintenir les pattes 16 de liaison insérées dans le logement 20 du tenon 8, autrement dit d'empêcher le retrait des pattes 16 de liaison hors du logement 20 du tenon 8.

Les surfaces fonctionnelles 18 d'appui transversal correspondent ici à l'une des faces latérales des crochets 24, par exemple la face latérale extérieure du crochet 24 de la patte 16 de liaison inférieure et la face latérale intérieure du crochet 24 de la patte 16 de liaison supérieure sur l'exemple des figures 2 à 4.

De plus, le cas échéant, l'un des crochets 24 peut présenter, sur sa face latérale correspondant à l'une des surfaces fonctionnelles 18 d'appui transversal, un épaulement 32 agencé pour recevoir une face inférieure 34 de l'autre crochet 24 lorsque les pattes 16 de liaison sont rapprochées l'une de l'autre pour être insérées dans le logement 20. Dans ce cas, les surfaces fonctionnelles 22 d'appui vertical peuvent correspondre à l'épaulement 32 et à la face inférieure 34.

La mise en appui des surfaces fonctionnelles 18 d'appui transversal d'une part, et des surfaces fonctionnelles 22 d'appui vertical d'autre part conduit à la superposition transversale et verticale des crochets 24, qui ensemble forment un crochet s'insérant dans le logement 20, comme représenté sur la figure 4.

La figure 5 montre un sous-ensemble 6 assemblé à la façade optique 2, les pattes 16 de liaison étant insérées dans le tenon 8.

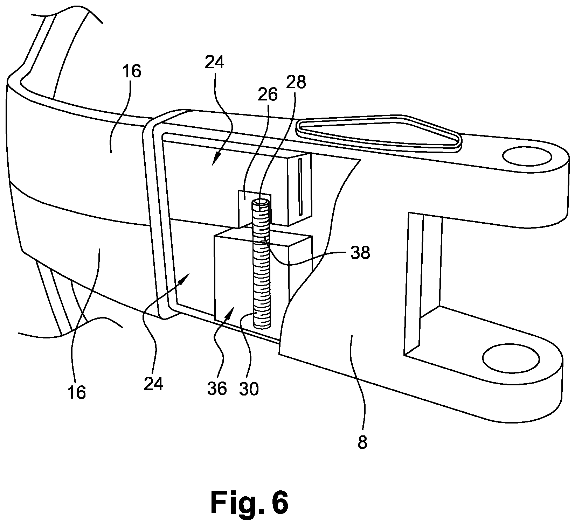

Comme cela est visible sur la figure 6, le tenon 8 peut comprendre un organe 36 de butée ou bloc agencé dans le logement 20 pour bloquer l'insertion d'au moins l'une des pattes 16 de liaison dans le tenon 8, selon une position de blocage prédéterminée correspondant donc à une position dans laquelle l'une au moins des pattes 16 de liaison est en appui contre l'organe 36 de butée.

L'organe 36 de butée peut comprendre un alésage 38 destiné à recevoir l'organe 30 de fixation. L'organe 36 de butée est agencé pour que l'alésage 38 débouche en regard des encoches 26 des crochets 24 formés par les extrémités des pattes 16 de liaison lorsque les pattes 16 de liaison sont bloquées par l'organe 36 de butée dans la position de blocage prédéterminée.

L'une des pattes 16 de liaison, ici la patte 16 de liaison inférieure, peut comprendre une surface 40 de butée agencée pour venir en appui contre l'organe 36 de butée dans la position de blocage prédéterminée.

Selon une possibilité, au moins l'une des pattes 16 de liaison peut comprendre un épaulement 42 agencé pour venir en appui contre une paroi 44 périphérique délimitant le logement 20 du tenon 8 dans la position de blocage prédéterminée, afin de limiter les jeux entre les pattes 16 de liaison et le tenon 8 une fois leur assemblage réalisé.

Selon le mode de réalisation illustré aux figures 1 à 8, les branches latérales 10 sont montées pivotantes sur le tenon 8, entre une position repliée (non représentée) dans laquelle les branches latérales 10 sont sensiblement parallèles à la façade optique 2 et une position déployée, illustrée aux figures 1, 7 et 8, dans laquelle les branches latérales 10 sont sensiblement perpendiculaires à la façade optique 2.

A cet effet, la monture 1 de lunettes peut comporter un axe 46 monté pivotant dans le tenon 8, l'axe 46 étant par exemple solidaire de l'extrémité proximale 14 de chaque branche latérale 10, ou d'une articulation 48 reliée à l'extrémité proximale 14 de chaque branche latérale 10.

Des moyens de rappel élastique, comme un ressort 50 en forme de lyre visible sur les figures 7 et 8, sont agencés pour rappeler chaque branche latérale 10 en position repliée lorsque les branches latérales 10 quittent la position repliée, et pour rappeler chaque branche latérale 10 en position déployée lorsque les branches latérales quittent la position déployée.

Comme cela est visible sur la figure 8, l'articulation 48 ou l'extrémité proximale 14 de chaque branche latérale 10 peut comprendre une première face 52 plane et une deuxième face 54 plane adjacentes et sécantes selon une arête 56. Le ressort 50 peut alors présenter une portion 56 spiralée destinée à venir en appui contre la première face 52 plane lorsque la branche latérale 10 est en position repliée, et en appui contre la deuxième face 54 plane lorsque la branche latérale 10 est en position déployée. Par ailleurs, le ressort 50 peut comprendre une portion 58 de rattachement au tenon 8, insérée et coincée dans un espace 60 en L ménagé dans le tenon 8.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans sortir pour autant du domaine de protection de l'invention.

## Revendications

1. Monture (1) de lunettes comprenant une façade optique (2) dans laquelle peuvent être enchâssés des verres (4), et deux sous-ensembles (6) amovibles destinés à être rattachés à la façade optique (2) et incluant chacun une branche latérale (10), **caractérisée en ce que** la monture (1) de lunettes présente au moins deux pattes (16) de liaison s'étendant depuis la façade optique (2) et comprenant chacune une surface fonctionnelle (18) d'appui transversal, les surfaces fonctionnelles (18) d'appui transversal étant agencées pour se superposer transversalement lorsque les deux pattes (16) de liaison sont rapprochées l'une de l'autre pour permettre le rattachement de l'un des sous-ensembles (6) à la façade optique (2) par insertion des pattes (16) de liaison dans un logement (20) d'un tenon (8) articulé par rapport à la branche latérale (10) de l'un des sous-ensembles (6), la superposition des surfaces fonctionnelles (18) d'appui transversal bloquant un déplacement transversal relatif des pattes (16) de liaison l'une par rapport à l'autre afin de faciliter leur insertion dans le logement (20), et **en ce que** les pattes (16) de liaison comprennent chacune une extrémité formant un crochet (24) de forme similaire muni d'une encoche (26) recevant une extrémité (28) d'un organe (30) de fixation destiné à maintenir les pattes (16) de liaison insérées dans le logement (20) du tenon (8).

2. Monture (1) de lunettes selon la revendication 1, **caractérisée en ce que** les pattes (16) de liaison comprennent chacune, en plus de la surface fonctionnelle (18) d'appui transversal, une surface fonctionnelle (22) d'appui vertical, les surfaces fonctionnelles (22) d'appui vertical étant agencées pour se superposer verticalement lorsque les deux pattes (16) de liaison sont rapprochées l'une de l'autre pour permettre le rattachement de l'un des sous-ensembles (6) à la façade optique (2) par insertion des pattes (16) de liaison dans le logement du tenon (8), la superposition des surfaces fonctionnelles (22) d'appui vertical bloquant un déplacement vertical relatif des pattes (16) de liaison l'une par rapport à l'autre.

3. Monture (1) de lunettes selon la revendication 1 ou 2, **caractérisée en ce que** les surfaces fonctionnelles (18) d'appui transversal sont, préalablement au rapprochement des pattes (16) de liaison, décalées transversalement.

4. Monture (1) de lunettes selon l'une des revendications 1 à 3, **caractérisée en ce que** chaque extrémité en forme de crochet (24) comprend une face latérale correspondant à l'une des surfaces fonctionnelles (18) d'appui transversal.

5. Monture (1) de lunettes selon la revendication 1 à 4, **caractérisée en ce que** l'une des extrémités en forme de crochet (24) comprend une face (34) inférieure correspondant à l'une des surfaces fonctionnelles (22) d'appui vertical, l'autre extrémité en forme de crochet (24) comprenant un épaulement (32) sur une face latérale, l'épaulement (32) correspondant à l'autre surface fonctionnelle (22) d'appui vertical.

6. Monture (1) de lunettes selon l'une des revendications 1 à 5, **caractérisée en ce que** le tenon (8) comprend un organe (36) de butée agencé dans le logement (20) pour bloquer l'insertion d'au moins l'une des pattes (16) de liaison dans le tenon (8) en une position de blocage prédéterminée.

7. Monture (1) de lunettes selon la revendication 6, **caractérisée en ce que** l'organe (36) de butée comprend un alésage (38) destiné à recevoir l'organe (30) de fixation, l'alésage (38) débouchant en regard des encoches (26) des crochets (24) formés par les extrémités des pattes (16) de liaison lorsque les pattes (16) de liaison sont bloquées par l'organe (36) de butée dans la position de blocage prédéterminée.

8. Monture (1) de lunettes selon la revendication 6 ou 7, **caractérisée en ce que** l'une des pattes (16) de liaison comprend une surface (40) de butée agencée pour venir en appui contre l'organe (36) de butée dans la position de blocage prédéterminée.

9. Monture (1) de lunettes selon l'une des revendications 6 à 8, **caractérisée en ce qu'**au moins l'une des pattes (16) de liaison comprend un épaulement (42) agencé pour venir en appui contre une paroi (44) périphérique délimitant le logement (20) du tenon (8), dans la position de blocage prédéterminée.

## Patentansprüche

1. Brillenfassung (1) eine optische Stirnseite (2) umfassend, in die Gläser (4) eingefasst werden können, und zwei abnehmbare Unterbaugruppen (6), die dazu bestimmt sind, an die optische Stirnseite (2) angebunden zu werden und jede einen seitlichen Bügel (10) einschließend, **dadurch gekennzeichnet, dass** die Brillenfassung (1) mindestens zwei Verbindungslaschen (16) aufweist, die sich aus der optischen Stirnseite (2) heraus erstrecken und jede davon eine funktionelle Oberfläche (18) zur querlaufenden Abstützung umfasst, wobei die funktionellen Oberflächen (18) zur querlaufenden Abstützung angeordnet sind, um sich querlaufend zu überlagern, wenn die beiden Verbindungslaschen (16) einander angenähert sind, um die Anbindung der einen der Unterbaugruppen (6) an die optische Stirnseite (2) durch Einführen der Verbindungslaschen (16) in eine Aufnahme (20) eines im Verhältnis zum seitlichen Bügel (10) artikulierten Zapfens (8) einer Unterbaugruppe (6) zu ermöglichen, wobei die Überlagerung der funktionellen Oberflächen (18) zur querlaufenden Abstützung eine querlaufende relative Verschiebung der Verbindungslaschen (16) zueinander blockiert, um deren Einführung in die Aufnahme (20) zu erleichtern, und dadurch, dass die Verbindungslaschen (16) jeweils ein Ende umfassen, das einen Haken (24) in einer ähnlichen Form bildet, der mit einer Ausnehmung (26) versehen ist, die ein Ende (28) eines Befestigungsorgans (30) aufnimmt, das dazu bestimmt ist, die Verbindungslaschen (16) festzuhalten, die in die Aufnahme (20) des Zapfens (8) eingeführt sind.

2. Brillenfassung (1) nach Anspruch 1, **dadurch gekennzeichnet, dass** die Verbindungslaschen (16) jeweils, zusätzlich zur funktionellen Oberfläche (18) zur querlaufenden Abstützung, eine funktionelle Oberfläche (22) zur vertikalen Abstützung umfassen, wobei die funktionellen Oberflächen (22) zur vertikalen Abstützung angeordnet sind, um sich vertikal zu überlagern, wenn die beiden Verbindungslaschen (16) einander angenähert sind, um die Anbindung der einen der Unterbaugruppen (6) an die optische Stirnseite (2) durch Einführen der Verbindungslaschen (16) in die Aufnahme des Zapfens (8) zu ermöglichen, wobei die Überlagerung der funktionellen Oberflächen (22) zur vertikalen Abstützung eine vertikale relative Verschiebung der Verbindungslaschen (16) zueinander blockiert.

3. Brillenfassung (1) nach Anspruch 1 oder 2, **dadurch gekennzeichnet, dass** die funktionellen Oberflächen (18) zur querlaufenden Abstützung vor der Annäherung der Verbindungslaschen (16) querlaufend verschoben werden.

4. Brillenfassung (1) nach einem der Ansprüche 1 bis 3, **dadurch gekennzeichnet, dass** jedes Ende in Hakenform (24) eine seitliche Fläche umfasst, die einer der funktionellen Oberflächen (18) zur querlaufenden Abstützung entspricht.

5. Brillenfassung (1) nach Anspruch 1 bis 4, **dadurch gekennzeichnet, dass** das eine der Enden in Hakenform (24) eine untere Fläche (34) umfasst, die einer der funktionellen Oberflächen (22) zur vertikalen Abstützung entspricht, wobei das andere Ende in Hakenform (24) einen Ansatz (32) auf einer seitlichen Fläche umfasst, wobei der Ansatz (32) der anderen funktionellen Oberfläche (22) zur vertikalen Abstützung entspricht.

6. Brillenfassung (1) nach einem der Ansprüche 1 bis 5, **dadurch gekennzeichnet, dass** der Zapfen (8) ein Anschlagorgan (36) umfasst, das in der Aufnahme (20) angeordnet ist, um die Einführung mindestens einer der Verbindungslaschen (16) in den Zapfen (8) in einer vorbestimmten Blockierposition zu blockieren.

7. Brillenfassung (1) nach Anspruch 6, **dadurch gekennzeichnet, dass** das Anschlagorgan (36) eine Bohrung (38) umfasst, die dazu bestimmt ist, um das Befestigungsorgan (30) aufzunehmen, wobei die Bohrung (38) gegenüber den Ausnehmungen (26) der Haken (24) einmündet, die durch die Enden der Verbindungslaschen (16) gebildet werden, wenn die Verbindungslaschen (16) durch das Anschlagorgan (36) in der vorbestimmten Blockierposition blockiert sind.

8. Brillenfassung (1) nach Anspruch 6 oder 7, **dadurch gekennzeichnet, dass** die eine der Verbindungslaschen (16) eine Anschlagoberfläche (40) umfasst, die angeordnet ist, um sich in der vorbestimmten Blockierposition an dem Anschlagorgan (36) abzustützen.

9. Brillenfassung (1) nach einem der Ansprüche 6 bis 8, **dadurch gekennzeichnet, dass** mindestens die eine der Verbindungslaschen (16) einen Ansatz (42) umfasst, der angeordnet ist, um sich an einer Umfangswand (44) abzustützen, die die Aufnahme (20) des Zapfens (8) in der vorbestimmten Blockierposition eingrenzt.

## Claims

1. A spectacle frame (1) comprising an optical facade (2) in which can be embedded glasses (4), and two removable subassemblies (6) intended to be attached to the optical facade (2) and each including a lateral arm (10), **characterized in that** the spectacle frame (1) has at least two connecting tabs (16) extending from the optical facade (2) and each comprising a functional transverse bearing surface (18), the functional transverse bearing surfaces (18) being arranged to be transversally superposed when the two connecting tabs (16) are brought closer to each other in order to allow attaching one of the subassemblies (6) to the optical facade (2) by insertion of the connecting tabs (16) in a housing (20) of a lug (8) hinged with respect to the lateral arm (10) of one of the subassemblies (6), the superposition of the functional transverse bearing surfaces (18) blocking a relative transverse displacement of the connecting tabs (16) relative to each other in order to facilitate their insertion into the housing (20), and **in that** the connecting tabs (16) comprise each an end forming a hook (24) of a similar shape provided with a notch (26) receiving one end (28) of a fastening member (30) intended to hold the connecting tabs (16) inserted into the housing (20) of the lug (8).

2. The spectacle frame (1) according to claim 1, **characterized in that** the connecting tabs (16) each comprise, in addition to the functional transverse bearing surface (18), a functional vertical bearing surface (22), the functional vertical bearing surfaces (22) being arranged to be vertically superposed when the two connecting tabs (16) are brought closer to each other in order to allow the attachment of one of the subassemblies (6) to the optical facade (2) by insertion of the connecting tabs (16) into the housing of the lug (8), the superposition of the functional vertical bearing surfaces (22) blocking a relative vertical displacement of the connecting tabs (16) relative to each other.

3. The spectacle frame (1) according to claim 1 or 2, **characterized in that** the functional transverse bearing surfaces (18) are transversely offset, before the connecting tabs (16) are brought closer to each other.

4. The spectacle frame (1) according to any of claims 1 to 3, **characterized in that** each hook-shaped end (24) comprises a lateral face corresponding to one of the functional transverse bearing surfaces (18).

5. The spectacle frame (1) according to claims 1 to 4, **characterized in that** one of the hook-shaped ends (24) comprises a lower face (34) corresponding to one of the functional vertical bearing surfaces (22), the other hook-shaped end (24) comprising a shoulder (32) on one lateral face, the shoulder (32) corresponding to the other functional vertical bearing surface (22).

6. The spectacle frame (1) according to any of claims 1 to 5, **characterized in that** the lug (8) comprises a stop member (36) arranged in the housing (20) to block the insertion of at least one of the connecting tabs (16) into the lug (8) in a predetermined blocking position.

7. The spectacle frame (1) according to claim 6, **characterized in that** the stop member (36) comprises a bore (38) intended to receive the fastening member (30), the bore (38) opening opposite the notches (26) of the hooks (24) formed by the ends of the connecting tabs (16) when the connecting tabs (16) are blocked by the stop member (36) in the predetermined blocking position.

8. The spectacle frame (1) according to claim 6 or 7, **characterized in that** one of the connecting tabs (16) comprises a stop surface (40) arranged to bear against the stop member (36) in the predetermined blocking position.

9. The spectacle frame (1) according to any of claims 6 to 8, **characterized in that** at least one of the connecting tabs (16) comprises a shoulder (42) arranged to bear against a peripheral wall (44) delimiting the housing (20) of the lug (8) in the predetermined blocking position.
